(19) Europäisches Patentamt

European Patent Office

Office européen des brevets

(11) **EP 0 806 760 B1**

(12) **FASCICULE DE BREVET EUROPEEN**

(45) Date de publication et mention
de la délivrance du brevet:
**01.08.2001 Bulletin 2001/31**

(51) Int Cl.⁷: **G10L 21/02**

(21) Numéro de dépôt: **97401001.9**

(22) Date de dépôt: **02.05.1997**

(54) **Procédé et dispositif de filtrage par égalisation d'un signal de parole, mettant en oeuvre un modèle statistique de ce signal**

Verfahren und Vorrichtung zur entzerrenden Filterung eines Sprachsignals unter Verwendung eines statistischen Signalmodells

Method and device for filtering a speech signal by equalisation, implemented by a statistical signal model

(84) Etats contractants désignés:
**DE FR GB NL**

(30) Priorité: **06.05.1996 FR 9605629**

(43) Date de publication de la demande:
**12.11.1997 Bulletin 1997/46**

(73) Titulaire: **FRANCE TELECOM**
**75015 Paris (FR)**

(72) Inventeurs:
 • **Mokbel, Chafic**
 **22300 Lannion (FR)**
 • **Jouvet, Denis**
 **22300 Lannion (FR)**
 • **Monné, Jean**
 **22700 Perros-Guirec (FR)**

(74) Mandataire: **Fort, Jacques**
 **CABINET PLASSERAUD**
 **84, rue d'Amsterdam**
 **75440 Paris Cedex 09 (FR)**

(56) Documents cités:
 **EP-A- 0 534 837**

 • **DATABASE INSPEC INSTITUTE OF ELECTRICAL ENGINEERS, STEVENAGE, GB Inspec No. 5027846, SEYMOUR ET AL.: "An HMM-based cepstral-domain speech enhancement system" XP002024668 & INTERNATIONAL CONFERENCE ON SPOKEN LANGUAGE PROCESSING 1994, vol. 3, 18 - 22 septembre 1994, YOKOHAMA, JP, pages 1595-1598,**
 • **EPHRAIM: "Speech enhancement using state dependent dynamical system model" INTERNATIONAL CONFERENCE ON ACOUSTICS, SPEECH, AND SIGNAL PROCESSING 1992, vol. 1, 23 - 26 mars 1992, SAN FRANCISCO, CA, US, pages 289-292, XP000341140**
 • **EPHRAIM ET AL.: "On the application of hidden Markov models for enhancing noisy speech" INTERNATIONAL CONFERENCE ON ACOUSTICS, SPEECH, AND SIGNAL PROCESSING 1988, vol. 1, 11 - 14 avril 1988, NEW YORK, NY, US , pages 533-536, XP002024667**

## Description

La présente invention concerne un procédé et un dispositif de filtrage par égalisation d'un signal de parole, mettant en oeuvre un modèle statistique de ce signal.

Dans toute la suite, on considérera par abus de langage que le terme "égalisation" est synonyme de "atténuation des perturbations".

Plus particulièrement, le procédé et le dispositif de filtrage de la présente invention s'appliquent à un signal de parole numérique susceptible d'être affecté par des perturbations, qui est le signal à traiter, ou signal propre, et mettent en oeuvre un modèle de Markov caché noté ci-après HMM (en anglais "Hidden Markov Model"), du signal propre, ou une approximation du modèle du signal propre estimé sur des données réelles, ainsi que des fonctions de filtrage par égalisation des perturbations.

Le procédé et le dispositif de la présente invention trouvent application à l'amélioration des procédés de reconnaissance automatique de la parole (notée ci-après RAP en abrégé), notamment à travers le réseau téléphonique, qu'il s'agisse du Réseau Téléphonique Commuté (RTC) ou du Groupe Spécial Mobile (GSM). La présente invention trouve également application au débruitage des signaux de parole.

Dans les systèmes de RAP, lorsque la reconnaissance est effectuée en local pour la commande vocale de téléphones "mains libres", d'ordinateurs, de terminaux d'information ou autres, les techniques connues visent à réduire les perturbations introduites par le bruit additif. Elles comprennent notamment le filtrage par soustraction spectrale, le filtrage d'antenne, le filtrage par état des modèles de Markov, ou l'ajout en ligne du bruit ambiant sur des modèles de référence.

Le filtrage par état de Markov consiste à appliquer un filtre par soustraction spectrale (filtre de Wiener) connaissant le modèle de Markov de la parole et l'état le plus probable dans lequel se trouve le système à un instant t. Le modèle du signal propre est donné par l'état du modèle de Markov, et le modèle du bruit est estimé sur les silences précédant le mot à débruiter.

Pour la reconnaissance centralisée, les techniques connues ont pour objet la réduction des effets des lignes téléphoniques, par soustraction aux vecteurs cepstraux de leur composante continue estimée sur un horizon suffisamment large. On rappelle que la notion d'horizon désigne, pour un signal téléphonique numérique subdivisé en fenêtres, un nombre entier déterminé de fenêtres successives. Pour une description plus détaillée de ce type d'approche, on pourra se reporter à l'article de C. MOKBEL, J. MONNE et D. JOUVET, intitulé "On-line adaptation of a speech recognizer to variations in telephone line conditions", Eurospeech, pages 1247-1250, Berlin, 1993. Pour un horizon assez large, on constate que la moyenne des vecteurs cepstraux représente les effets des lignes téléphoniques, cette constatation étant d'autant mieux vérifiée que les changements des caractéristiques du canal sont lents.

D'une manière générale, un système de débruitage ou d'égalisation se fonde sur la connaissance des caractéristiques du signal propre et celles du bruit ou des perturbations. Néanmoins, la situation est bien plus compliquée si le modèle du signal propre ou ses paramètres sont inconnus.

Par exemple, si on suppose qu'un segment de parole propre est la sortie d'un système autorégressif dont on ne connaît pas les paramètres, on peut recourir, pour le débruitage, à un procédé du type "Estimate-Maximise" afin d'obtenir une estimation des paramètres du modèle autorégressif et afin de filtrer les perturbations (confer par exemple l'article de G. CELEUX et J. DIEBOLT, intitulé "Une version de type recuit simulé de l'algorithme EM", Rapports de Recherche N° 1123, programme 5, INRIA, novembre 1989).

On peut également recourir à l'égalisation aveugle, qui se fonde sur les statistiques propres du signal numérique pour déterminer le critère d'adaptation des coefficients de l'égaliseur qui effectue l'égalisation. En particulier, le document FR-A-2 722 631 décrit un procédé et un système de filtrage adaptatif par égalisation aveugle d'un signal téléphonique numérique et leur application à la transmission téléphonique et/ou la RAP. Le procédé décrit dans ce document se fonde entièrement sur les statistiques générales relatives au signal de parole et sur l'hypothèse d'un effet convolutif presque constant du canal téléphonique.

De telles approches donnent des résultats satisfaisants si on peut faire des hypothèses simples sur le signal propre, à savoir, si on peut le supposer autorégressif et/ou gaussien et/ou stationnaire, ce qui n'est pas toujours possible.

D'autres études récentes cherchent à utiliser les modèles statistiques du vocabulaire afin de réduire les perturbations et/ou la variabilité du signal de parole, ce qui permettrait une reconnaissance plus robuste.

Ainsi, le document DATABASE INSPEC INSTITUTE OF ELECTRICAL ENGINEERS, INTERNATIONAL CONFERENCE ON SPOKEN LANGUAGE PROCESSING 1994, vol.3, 18-22 septembre 1994, Yokohama Japan, pages 1595-1598 décrit un procédé d'amélioration d'un signal de parole affecté d'un bruit non corrélé, par l'intermédiaire d'un modèle de Markov caché dans le domaine cepstral.

Le document EP 534 837 décrit également un procédé de traitement de la parole mettant en oeuvre des modèles de Markov cachés, par soustraction non linéaire.

Le document "Speech enhancement using state dependent dynamical system model" EPHRAIM - ICASSP'92 vol.1, 23-26 mars 1992, SAN FRANCISCO, CA, USA, décrit un processus de modélisation d'un signal de parole, mettant en oeuvre un modèle de Markov caché.

Ces travaux présentent tous l'inconvénient de ne pas pouvoir donner lieu à une application en ligne d'une manière synchrone à la trame acoustique. En effet, les procédés proposés attendent la fin du signal à reconnaître pour effectuer les itérations d'estimation des biais et d'identification du signal débruité ou égalisé. De plus, les estimateurs de biais à soustraire dépendent directement, ou indirectement dans le cas d'un procédé "Estimate-Maximise", du meilleur chemin dans le modèle de Markov, un chemin, ou alignement, au sens de Markov étant une association entre une suite de trames acoustiques et une suite d'états (ou de transitions) auxquels correspondent des densités de probabilités du modèle. Cette dépendance risque de biaiser l'approche si l'observation de départ est très perturbée, car ces perturbations peuvent induire de faux alignements.

L'approche proposée par la présente invention diffère, dans son principe de base, des approches décrites précédemment, est plus générale et remédie aux inconvénients précités en ce qu'elle est synchrone à la trame acoustique.

La présente invention propose à cet effet un procédé d'égalisation d'un signal de parole constitué par une séquence observée de trames acoustiques d'entrée successives, lequel signal de parole est susceptible d'être affecté par des perturbations, suivant lequel procédé on modélise le signal de parole par un HMM, ce procédé étant caractérisé en ce que, à chaque instant t :

- on constitue des filtres d'égalisation associés aux chemins au sens de Markov à l'instant t, à partir de plusieurs trames acoustiques antérieures et à partir de plusieurs paramètres du modèle de Markov;
- on applique au moins plusieurs desdits filtres d'égalisation pour obtenir, à l'instant t, plusieurs séquences de trames acoustiques filtrées et une probabilité d'émission pour chacun des chemins respectivement associés aux filtres d'égalisation appliqués;
- on retient le filtre d'égalisation correspondant au chemin le plus probable, au sens de Markov, c'est-à-dire le chemin pour lequel la probabilité d'émission de la séquence de trames acoustiques filtrées par le filtre d'égalisation appliqué correspondant est la plus élevée; et
- on retient comme trame égalisée la trame filtrée fournie par le filtre d'égalisation retenu.

La présente invention propose également un dispositif d'égalisation mettant en oeuvre le procédé ci-dessus, caractérisé en ce qu'il comprend un module de filtrage d'égalisation recevant en entrée le signal de parole affecté par des perturbations et fournissant en sortie un signal de parole à perturbations réduites.

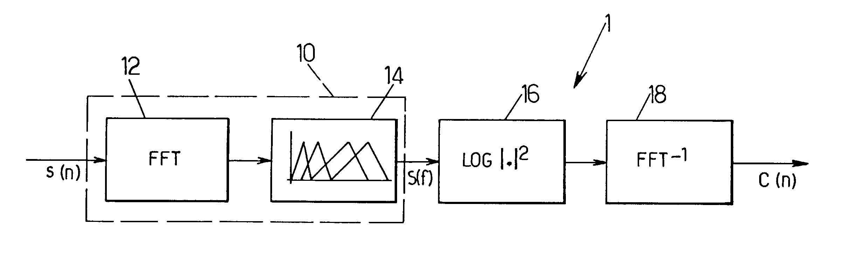

D'autres caractéristiques et avantages de la présente invention ressortiront à la lecture de la description et à l'observation de la figure unique qui l'accompagne, et qui représente, dans un mode particulier de réalisation, le module de calcul du cepstre du signal de parole, compris dans le module de filtrage d'égalisation du dispositif de la présente invention.

Dans toute la suite, on considère un signal de parole constitué par une séquence observée $\underline{x}_1,...,\underline{x}_t,...,\underline{x}_{Tf}$ de trames acoustiques successives, dites trames acoustiques d'entrée. L'indice 1 de $\underline{x}_1$ représente un instant initial prédéterminé d'observation; l'indice t de $\underline{x}_t$ représente l'instant courant, et l'indice $T_f$ de $\underline{x}_{Tf}$ représente l'instant final de la séquence observée. Ce signal de parole est susceptible d'être affecté par des perturbations.

On suppose que le signal de parole est engendré par un ou plusieurs mélanges dont les paramètres sont connus ou peuvent être estimés sur un échantillon d'apprentissage. Ainsi, ce signal peut être vu comme la réalisation d'un HMM, qu'on notera $\lambda$. A un instant donné, l'observation est engendrée par l'une des composantes du ou des mélanges associés à un automate de Markov. Cependant l'observation du signal ne permet pas de connaître cette composante ni le mélange correspondant. Les observations sont dites incomplètes. On connaît uniquement les paramètres du ou des mélanges, les paramètres de l'automate de Markov et la nature des perturbations qui affectent le signal observé.

Les HMM sont bien connus de l'homme du métier, en particulier en RAP. On pourra se reporter à ce sujet à l'ouvrage de L. RABINER et B.-H. JUANG intitulé "Fundamentals of speech recognition", Prentice Hall Signal Processing Series, A.V. Oppenheim Series editor, 1993, ou encore à la Thèse de Doctorat de D. JOUVET, "Reconnaissance de mots connectés indépendamment du locuteur par des méthodes statistiques", E.N.S.T., 1988.

On rappelle qu'un HMM est constitué d'un automate de Markov défini par un certain nombre de paramètres : ses états ou transitions $q_1,...,q_N$ (N désignant le nombre d'états du modèle), les transitions entre ces états, et les densités d'émission d'un vecteur d'observation étant dans un état donné (ou pour une transition donnée). Ainsi, trois ensembles de paramètres décrivent le HMM $\lambda$ :

- l'ensemble des probabilités d'occupation d'un état $q_i$ à l'instant initial $t_o$, notées $\pi(q_i)$ ;
- l'ensemble des probabilités de transition d'un état $q_i$ à un état $q_j$, notées $a_{qi,qj}$ et supposées indépendantes du temps;

- l'ensemble des probabilités d'émission d'un vecteur d'observation $\underline{x}$ étant dans un état donné $q_i$, notées $b_{qi}(\underline{x})$ ; ces probabilités seront dans la suite supposées obéir à une loi de probabilité gaussienne, de vecteur moyenne $\underline{m}_{qi}$ et de matrice de covariance $\underline{R}_{qi}$.

Les probabilités d'émission sont ici associées aux états de l'automate de Markov. Cependant, elles peuvent aussi bien être associées aux transitions : cela ne modifie en rien les caractéristiques essentielles de l'invention.

On note $\lambda = (\pi, a, b)$.

Dans ce modèle, un chemin de longueur t au sens de Markov est, comme rappelé plus haut, une association entre une suite de t trames et une suite de t états auxquels correspondent des densités de probabilités du modèle. Pour simplifier, on considère qu'un chemin est une suite s de t états ou transitions $q_1,...,q_t$. On note s = $\{q_1,...,q_t\}$.

La réduction des perturbations dans le signal observé se fait en appliquant à chaque trame $\underline{x}_t$ de celui-ci une fonction d'égalisation, associée à un filtre d'égalisation ou égaliseur.

Selon le procédé de la présente invention, à chaque instant t, comme on va le décrire en détail ci-après, on constitue des égaliseurs associés aux chemins présents dans l'automate de Markov à l'instant t. Ainsi, l'évolution d'un chemin ou alignement dans l'automate dépend non seulement du signal observé à un instant donné, mais aussi de l'état de l'égaliseur porté par ce chemin, cet égaliseur étant appliqué à la trame observée à chaque instant.

On note ci-après $F_{\theta(s)}(.)$ la fonction associée à l'égaliseur porté par le chemin s. Elle est paramétrée par un vecteur $\theta(s)$.

A un instant donné t, pour un chemin donné s, et connaissant les paramètres du HMM $\lambda$, on cherche à estimer le meilleur vecteur de paramètres, noté $\bar{\theta}_t(s)$, de la fonction d'égalisation. En appliquant la méthode du maximum de vraisemblance, on estime ce vecteur par le vecteur de paramètres pour lequel la probabilité, sachant le modèle $\lambda$, d'émission de la séquence de trames acoustiques $F_{\theta(s)}(\underline{x}_{t0}),..., F_{\theta(s)}(\underline{x}_t)$, qui est la séquence des trames acoustiques d'entrée filtrées par l'égaliseur porté par le chemin s, est maximale. On note

$$\bar{\theta}_t(s) = \text{argmax}_\theta \, [P(F_{\theta(s)}(\underline{x}_{t0}),..., F_{\theta(s)}(\underline{x}_t),s/\lambda)].$$

Déterminer $\bar{\theta}_t(s)$ revient donc à maximiser

$$P(F_{\theta(s)}(\underline{x}_{t0}),..., F_{\theta(s)}(\underline{x}_t), s/\lambda).$$

Etant donné la définition des paramètres du modèle de Markov rappelée plus haut, on obtient

$$P(F_{\theta(s)}(\underline{x}_{t0}),...,F_{\theta(s)}(\underline{x}_t),s/\lambda) = \prod_{\tau=t_0}^{t} a_{q(\tau-1),q\tau} \cdot b_{q\tau}[F_{\theta(s)}(\underline{x}_\tau)]$$

$$= \prod_{\tau=t_0}^{t} a_{q(\tau-1),q\tau} \cdot \frac{1}{(2\pi)^{p/2} \cdot \|R_{q\tau}\|^{1/2}} \cdot E \qquad (1)$$

où $E = \exp[-(1/2).(F_{\theta(s)}(\underline{x}_\tau)-\underline{m}_{q\tau})^T.\underline{R}_{q\tau}^{-1}.(F_{\theta(s)}(\underline{x}_\tau)-\underline{m}_{q\tau})].\|\underline{J}(\underline{x}_\tau)\|^{-1}$,

où $t_o$ est un instant initial prédéterminé,

où $\underline{m}_{q\tau}$ et $\underline{R}_{q\tau}$ sont respectivement le vecteur représentant la moyenne et la matrice de covariance associés à la loi de probabilité d'émission d'un vecteur $\underline{x}_\tau$ dans l'état ou transition $q_\tau$ ,

où $(.)^T$ désigne la matrice transposée,

où $(.)^{-1}$ désigne la matrice inverse,

où on utilise la notation $q(\tau-1) = q_{\tau-1}$ pour plus de clarté,

où p est la dimension de l'espace d'observation,

où $a_{q(t0-1),qt0}$ représente la probabilité d'occuper l'état initial $q_{t0}$, et

où $\underline{J}(\underline{x}_\tau)$ est la matrice Jacobien dont l'élément situé dans la k$^{\text{ème}}$ ligne et la $\ell^{\text{ème}}$ colonne, k et $\ell$ étant des entiers, est la dérivée du k$^{\text{ème}}$ élément du vecteur $\underline{x}_\tau$ par rapport au $\ell^{\text{ème}}$ élément du vecteur $F_{\theta(s)}(\underline{x}_\tau)$.

Maximiser $P(F_{\theta(s)}(\underline{x}_{t0}), ..., F_{\theta(s)}(\underline{x}_t), s/\lambda)$ revient à maximiser log $P(F_{\theta(s)}(\underline{x}_{t0}),...,F_{\theta(s)}(\underline{x}_t),s/\lambda)$, étant donné que la fonction logarithme est strictement croissante. Notons

$$C_{q\tau} = \frac{1}{(2\pi)^{p/2} \cdot \|R_{q\tau}\|^{1/2}}.$$

D'après l'expression (1) obtenue précédemment, on a :

$$\log\ P(F_{\theta(s)}(\underline{x}_{t0}),\ldots,F_{\theta(s)}(\underline{x}_t),s/\lambda) = \sum_{\tau=t_0}^{t} \log(a_{q(\tau-1).q\tau} \cdot C_{q\tau}) - D$$

$$\text{où}\ D = (1/2).\sum_{\tau=t_0}^{t} (F_{\theta(s)}(\underline{x}_\tau) - \underline{m}_{q\tau})^T \cdot \underline{R}_{q\tau}^{-1} \cdot (F_{\theta(s)}(\underline{x}_\tau) - \underline{m}_{q\tau})$$
$$+ 2.\ln\|\underline{J}(\underline{x}_\tau)\|$$

où ln désigne le logarithme népérien.

Maximiser log $P(F_{\theta(s)}(\underline{x}_{t0}),\ldots,F_{\theta(s)}(\underline{x}_t), s/\lambda)$ revient donc à minimiser l'expression

$$(1/2).\sum_{\tau=t_0}^{t} (F_{\theta(s)}(\underline{x}_\tau) - \underline{m}_{q\tau})^T \cdot \underline{R}_{q\tau}^{-1} \cdot (F_{\theta(s)}(\underline{x}_\tau) - \underline{m}_{q\tau})$$
$$+ 2.\ln\|\underline{J}(\underline{x}_\tau)\|.$$

Minimiser cette expression revient à la dériver par rapport à θ et chercher une valeur de θ pour laquelle cette dérivée est nulle. On supposera que la fonction $F_{\theta(s)}(.)$ est dérivable par rapport à θ(s). La dérivation et la condition d'annulation de la dérivée conduisent à l'équation

$$\sum_{\tau=t_0}^{t} \left(F_{\theta(s)}(\underline{x}_\tau) - \underline{m}_{q\tau}\right)^T \cdot \underline{R}_{q\tau}^{-1} \cdot \frac{\partial F_{\theta(s)}(\underline{x}_\tau)}{\partial \theta} + \frac{\partial \ln\|\underline{J}(\underline{x}_\tau)\|}{\partial \theta} = 0, \quad (2)$$

où $(.)^{-1}$ désigne la matrice inverse, et où $\frac{\partial}{\partial\theta}$ désigne la dérivation partielle par rapport à θ.

Dans l'équation (2), pour des types particuliers de fonction d'égalisation $F_{\theta(s)}(.)$, le second terme de la somme, soit

$$\frac{\partial \ln\|\underline{J}(\underline{x}_\tau)\|}{\partial \theta},$$

disparaît, comme on le décrit plus loin.

L'équation (2) permet d'estimer les paramètres de l'égaliseur ayant pour fonction $F_{\theta(s)}(.)$, porté par le chemin s. On constate que la seule hypothèse émise est la dérivabilité de la fonction d'égalisation. L'équation obtenue permet donc de déterminer entièrement l'égaliseur, en particulier quelle que soit la nature des perturbations, et quelle que soit la nature de la séquence observée $\underline{x}_1,\ldots,\underline{x}_t$.

On distingue deux modes de réalisation fondamentaux du procédé d'égalisation de la présente invention : d'une part, son application au filtrage, et d'autre part, son application à la reconnaissance robuste.

Dans le premier mode de réalisation, c'est-à-dire en filtrage, pour produire une trame égalisée à un instant donné, on ne considère que l'égaliseur porté par le chemin le plus probable.

Ainsi, pour filtrer les perturbations qui affectent la trame acoustique $\underline{x}_{t+1}$, on applique uniquement l'égaliseur ayant pour fonction $F_{\bar{\theta}t(s(t))}$,

- où $\bar{\theta}_t(s)$ est le meilleur vecteur de paramètres défini plus haut, à savoir, le meilleur vecteur de paramètres de l'égaliseur ayant pour fonction $\bar{F}_{\theta t(s)}$, et

- où $\bar{s}(t)$ est le chemin le plus probable au sens de Markov, soit

$$\bar{s}(t) = \text{argmax}_s \; [P(\bar{F}_{\theta(s)}(\underline{x}_1),..., \bar{F}_{\theta(s)}(\underline{x}_t),s/\lambda)], \tag{3}$$

c'est-à-dire le chemin pour lequel la probabilité d'émission de la séquence de trames acoustiques filtrées $\bar{F}_{\theta(s)}(\underline{x}_1),..., \bar{F}_{\theta(s)}(\underline{x}_t)$ sachant $\lambda$, est maximale.

Dans le second mode de réalisation, c'est-à-dire en reconnaissance robuste, on attend la fin de la parole prononcée, puis on identifie le mot à reconnaître au chemin le plus probable dans le HMM, sachant que les égaliseurs des différents chemins interviennent tout au long du décodage acoustique, c'est-à-dire au fur et à mesure de la progression des chemins ou alignements avec l'arrivée de nouvelles observations.

Ainsi, en reconnaissance robuste, pour filtrer les perturbations qui affectent la trame acoustique $\underline{x}_{t+1}$ (filtrage a priori) ou la trame acoustique $\underline{x}_t$ (filtrage a posteriori), on applique l'égaliseur ayant pour fonction $\bar{F}_{\theta t(s)}$ pour chacun des chemins s de l'automate de Markov. La décision de reconnaissance est prise à l'instant final $T_f$ de la séquence observée de trames acoustiques d'entrée successives : on sélectionne le chemin le plus probable $\bar{s}(T_f)$ à l'instant $T_f$, comme étant le chemin qui vérifie

$$\bar{s}(T_f) = \text{argmax}_s \; [P(\bar{F}_{\theta(s)}(\underline{x}_1),..., \bar{F}_{\theta(s)}(\underline{x}_{Tf}), s/\lambda)].$$

En théorie, l'équation (3) exige de calculer à chaque instant t la probabilité, sur tout chemin, d'un modèle partant de l'instant initial. L'implantation correspondante devient très coûteuse en complexité et donc en temps de calcul si la fonction d'égalisation est complexe.

En pratique, pour éviter cet écueil, on allège les calculs en mettant en oeuvre une procédure adaptative, qui ne prend en compte que les i premiers points du chemin s pour l'estimation du meilleur vecteur de paramètres $\bar{\theta}_i(s)$ de l'égaliseur porté par ce chemin, i étant un entier compris entre 1 et t.

Ainsi, dans le premier mode de réalisation, on sélectionne le chemin le plus probable comme étant celui qui vérifie l'approximation

$$\bar{S}(t) = \text{argmax}_s \; [P(\bar{F}_{\theta 1(s)}(\underline{x}_1),..., \bar{F}_{\theta t(s)}(\bar{x}_t),s/\lambda)],$$

où $\bar{\theta}_i(s)$ est le meilleur vecteur de paramètres de l'égaliseur ayant pour fonction $\bar{F}_{\theta\, i(s)}$, estimé sur les i premiers points du chemin s.

De façon analogue, dans le second mode de réalisation, on sélectionne le chemin le plus probable comme étant celui qui vérifie l'approximation

$$\bar{s}(T_f) = \text{argmax}_s[P(\bar{F}_{\theta 1(s)}(\underline{x}_1),...,\bar{F}_{\theta Tf(s)}(\underline{x}_{Tf}),s/\lambda)],$$

où $\theta_i(s)$ est le meilleur vecteur de paramètres de l'égaliseur ayant pour fonction $\bar{F}_{\theta i(s)}$, estimé sur les i premiers points du chemin s.

Il est clair que cette implantation ne modifie pas les fonctions d'estimation des paramètres des égaliseurs portés par les différents chemins. Néanmoins, elle est susceptible d'influencer l'ordonnancement des chemins selon leurs probabilités. Afin de réduire les effets de cette approximation tout en conservant une complexité de calcul raisonnable, on peut réaliser un ajustement des probabilités sur les m dernières trames, où m est un entier prédéterminé. On peut en effet montrer qu'un tel ajustement n'augmente pas la complexité de calcul.

Dans le même but d'allégement des calculs, on effectue en pratique une autre approximation. Si on devait garder à chaque instant t les filtres de tous les chemins possibles dans un HMM à N états, on obtiendrait $N^{Tf}$ filtres. Cela n'est pas réalisable en pratique. On pourrait choisir de garder uniquement les K meilleurs chemins, où K est un entier prédéterminé. Dans un mode particulier de réalisation concernant un système de RAP qui utilise l'algorithme de Viterbi, on garde à chaque instant uniquement le meilleur chemin aboutissant dans un état donné ; le nombre de filtres possibles est par conséquent réduit à N, où N est le nombre d'états précité.

Toujours dans un but d'allégement des calculs, on peut réaliser une quantification des vecteurs de paramètres $\theta(s)$. On peut également grouper les fonctions d'égalisation en familles associées respectivement à une même unité acoustique, telle que le phonème.

Les perturbations rencontrées peuvent être de nature convolutive et/ou additive.

Comme exemple de perturbation additive, on peut citer un bruit de moteur, ou de klaxon, qui vient s'ajouter à la parole ; c'est le cas par exemple lorsqu'un automobiliste téléphone dans son véhicule, ou lorsqu'un piéton téléphone dans un environnement de circulation automobile, ou plus généralement, en environnement bruité.

Les perturbations peuvent également être faiblement variables dans le temps. Dans ce cas, on peut introduire des facteurs d'oubli dans l'estimation.

Les perturbations peuvent également consister en un biais constant accompagné d'une fluctuation autour de ce biais.

On décrit dans ce qui suit deux types particuliers de fonction d'égalisation mis en oeuvre par le procédé de la présente invention. Ces deux fonctions particulières d'égalisation sont appliquées respectivement à deux types fondamentaux de perturbations.

La première fonction d'égalisation retranche un biais aux trames acoustiques. Cette fonction dérive de l'hypothèse d'un effet convolutif important dû au canal de transmission, et à un effet du locuteur, à réduire.

La seconde fonction d'égalisation est une fonction affine, qui fait intervenir la régression linéaire multiple. Elle s'applique avantageusement à une perturbation consistant en un bruit additif important.

Dans le cas de la première fonction d'égalisation, c'est-à-dire dans le cas de la suppression d'un biais, on montre, à partir de la formule générale (2) d'estimation des paramètres de l'égaliseur, que pour chaque chemin, l'égaliseur a pour fonction

$$F_\theta(\underline{x}) = \underline{x} - \underline{b}$$

où $\theta = \underline{b}$, et $\underline{b}$ est défini par

$$\underline{b}^T = \left[ \sum_{\tau=t_0}^{t} (\underline{x}_\tau - \underline{m}_{q\tau})^T \cdot \underline{R}_{q\tau}^{-1} \right] \cdot \left[ \sum_{\tau=t_0}^{t} \underline{R}_{q\tau}^{-1} \right]^{-1} \cdot \qquad (4)$$

Dans ce cas, dans l'équation (2), le second terme de la somme disparaît.

Des calculs intermédiaires non détaillés ici permettent d'interpréter la formule d'estimation (4) ci-dessus de la façon suivante. Le biais, pour un chemin donné, est la somme des écarts des vecteurs des moyennes correspondantes sur le chemin, ces écarts étant pondérés par l'inverse des variances autour des moyennes (plus la variance est importante, moins l'écart a de poids dans la somme), et la somme étant pondérée par l'inverse de la somme des inverses des variances le long du chemin considéré (le biais estimé a donc bien la dimension d'un vecteur acoustique).

Dans le cas de la seconde fonction d'égalisation, c'est-à-dire dans le cas d'une régression linéaire multiple, on montre, à partir de la formule générale (2) d'estimation des paramètres de l'égaliseur, qu'on filtre les perturbations par régression linéaire multiple au moyen d'un égaliseur ayant pour fonction, pour chaque chemin, une fonction affine

$$F_\theta(\underline{x}) = \underline{A}.\underline{x} + \underline{b},$$

où $\theta = (\underline{A},\underline{b})$, où $\underline{A}$ est une matrice carrée et $\underline{b}$ est un vecteur colonne.

Dans un mode particulier de réalisation, la matrice $\underline{A}$ est diagonale.

On montre que la régression est un rapport entre les vecteurs des moyennes et les vecteurs des trames acoustiques pondérés le long du chemin considéré.

On décrit dans ce qui suit le dispositif de la présente invention, dans des modes particuliers de réalisation.

Le dispositif d'égalisation mettant en oeuvre le procédé décrit ci-dessus comprend un module de filtrage d'égalisation. Ce module reçoit en entrée le signal de parole affecté par des perturbations, effectue sur ce signal l'ensemble des opérations de filtrage conformes au procédé ci-dessus, et fournit en sortie un signal de parole à perturbations réduites.

Les trames acoustiques $\underline{x}_1,..., \underline{x}_t,...,\underline{x}_{Tf}$ sont choisies de façon à représenter l'information la plus pertinente possible contenue dans le signal.

Pour une application en RAP, les vecteurs cepstraux constituent un exemple, donné ici à titre non limitatif, de trames acoustiques appropriées. Généralement, on ne considère que la première dizaine de coefficients cepstraux. Ils modélisent en effet de façon assez satisfaisante la réponse impulsionnelle du conduit vocal, et portent donc l'information pertinente pour la reconnaissance. De plus; ces coefficients sont insensibles à l'énergie du signal d'entrée, ce qui est un critère de qualité en RAP.

Les vecteurs cepstraux peuvent être calculés à partir du signal de parole sur des fenêtres temporelles qui se recouvrent partiellement. Ces fenêtres peuvent avoir une longueur temporelle fixe, comprise par exemple entre 10 et 40 ms.

La figure unique représente, pour une application en RAP, un mode particulier de réalisation d'un module 1 de calcul du cepstre compris dans le module de filtrage d'égalisation.

A l'entrée du système de RAP, un module de numérisation de type classique (non représenté) transforme le signal de parole analogique en un signal de parole numérique s(n). Le signal s(n) est fourni en entrée du module 1.

Le module 1 comprend en entrée un module 10 de calcul de l'énergie spectrale du signal de parole. Le module 10 comprend un module 12 de transformation de Fourier rapide, qui fournit en sortie le spectre du signal.

La sortie du module 12 est connectée à l'entrée d'un banc de filtres 14, qui effectue un lissage du spectre pour l'estimation de l'enveloppe spectrale : à savoir, les bandes critiques du banc de filtres 14 sont réparties suivant une échelle non linéaire, l'échelle MEL ou BARK, ce qui apporte une résolution spectrale plus élevée dans les basses fréquences que dans les hautes fréquences, et permet ainsi une meilleure adéquation au système auditif humain; on a en effet prouvé que les basses fréquences sont analysées par le système auditif avec une résolution plus élevée que les hautes fréquences. Typiquement, le banc de filtres 14 compte 24 bandes de fréquence.

En sortie du banc de filtres 14, on obtient pour chaque fenêtre du signal un vecteur formé des énergies spectrales dans chacune des 24 bandes de fréquence, constituant un spectre lissé S(f).

La sortie du banc de filtres 14, qui est aussi la sortie du module 10 de calcul de l'énergie spectrale, est connectée à l'entrée d'un module 16 de calcul du logarithme de l'énergie spectrale du signal de parole. La sortie du module 16 est connectée à l'entrée d'un module 18 de transformation de Fourier rapide inverse, dans lequel l'implantation de la transformation de Fourier inverse se fait par une transformation en cosinus inverse. Le module 18 fournit en sortie le cepstre C(n) du signal de parole s(n), sous forme d'un ensemble de vecteurs cepstraux appelés MFCC (en anglais "Mel Frequency-based Cepstral Coefficients").

Le procédé, respectivement le dispositif, de la présente invention présentent l'avantage de pouvoir être combinés facilement avec tout procédé, respectivement dispositif, de prétraitement du signal.

Les résultats obtenus en utilisant le procédé et le dispositif de la présente invention sont très satisfaisants. Ils font notamment apparaître, en RAP, une réduction des taux d'erreur allant jusqu'à 30 % dans certaines conditions.

**Revendications**

1. Procédé d'égalisation d'un signal de parole constitué par une séquence observée de trames acoustiques d'entrée successives, lequel signal de parole est susceptible d'être affecté par des perturbations, suivant lequel procédé on modélise le signal de parole par un modèle de Markov caché, ce procédé étant caractérisé en ce que, à chaque instant t :

   - on constitue des filtres d'égalisation associés aux chemins au sens de Markov à l'instant t, à partir de plusieurs trames acoustiques antérieures et à partir de plusieurs paramètres du modèle de Markov;
   - on applique au moins plusieurs desdits filtres d'égalisation pour obtenir, à l'instant t, plusieurs séquences de trames acoustiques filtrées et une probabilité d'émission pour chacun des chemins respectivement associés aux filtres d'égalisation appliqués;
   - on retient le filtre d'égalisation correspondant au chemin le plus probable, au sens de Markov, c'est-à-dire le chemin pour lequel la probabilité d'émission de la séquence de trames acoustiques filtrées par le filtre d'égalisation appliqué correspondant est la plus élevée; et
   - on retient comme trame égalisée la trame filtrée fournie par le filtre d'égalisation retenu.

2. Procédé selon la revendication 1, dans lequel

   on représente chaque trame acoustique par un vecteur $\underline{x}_t$,
   un chemin de longueur t au sens de Markov est une suite de t états ou transitions notée s = {$q_1$, ..., $q_t$ }, et la fonction définissant le filtre d'égalisation associé au chemin s est notée $F_{\theta(s)}(.)$, où $\theta(s)$ est un vecteur de paramètres du filtre d'égalisation associé au chemin s, ledit procédé étant caractérisé en ce que pour chaque chemin s, on donne au filtre d'égalisation des paramètres estimés grâce à l'équation

$$\sum_{\tau=t_0}^{t} \left( F_{\theta(s)}(\underline{x}_\tau) - \underline{m}_{q\tau} \right)^T \cdot \underline{R}_{q\tau}^{-1} \cdot \frac{\partial F_{\theta(s)}(\underline{x}_\tau)}{\partial \theta} + \frac{\partial \ln \| \underline{J}(\underline{x}_\tau) \|}{\partial \theta} = 0$$

où $t_o$ est un instant initial prédéterminé,

où $\underline{m}_{q\tau}$ et $\underline{R}_{q\tau}$ sont respectivement le vecteur représentant la moyenne et la matrice de covariance associés à la loi de probabilité d'émission d'un vecteur $\underline{x}_\tau$ dans l'état ou transition $q_\tau$,

où $(.)^T$ désigne la matrice transposée,

où $(.)^{-1}$ désigne la matrice inverse,

où $\frac{\partial}{\partial \theta}$ désigne la dérivation partielle par rapport à $\theta$, et

où $\underline{J}(\underline{x}_\tau)$ est la matrice Jacobien dont l'élément situé dans la $k^{\text{ème}}$ ligne et la $\ell^{\text{ème}}$ colonne, k et $\ell$ étant des entiers, est la dérivée du $k^{\text{ème}}$ élément du vecteur $\underline{x}_\tau$ par rapport au $\ell^{\text{ème}}$ élément du vecteur $F_{\theta(s)}(\underline{x}_\tau)$.

**3.** Procédé selon l'une quelconque des revendications 1 et 2, dans lequel le modèle de Markov caché est noté $\lambda$, caractérisé en ce que pour filtrer les perturbations qui affectent la trame acoustique $\underline{x}_{t+1}$ (filtrage a priori) ou la trame acoustique $\underline{x}_t$ (filtrage a posteriori), on applique uniquement le filtre de fonction d'égalisation $\bar{F}_{\theta \bar{t}(s(t))}$,

- où $\bar{\theta}_t(s)$ est le meilleur vecteur de paramètres du filtre d'égalisation de fonction $\bar{F}_{\theta t(s)}$, soit

$$\bar{\theta}_t(s) = \operatorname{argmax}_\theta \left[ P(F_{\theta(s)}(\underline{x}_{t0}),...,F_{\theta(s)}(\underline{x}_t),s/\lambda) \right],$$

c'est-à-dire le vecteur de paramètres pour lequel la probabilité d'émission de la séquence de trames acoustiques filtrées $F_{\theta(s)}(\underline{x}_{t0})$, ..., $F_{\theta(s)}(\underline{x}_t)$, sachant $\lambda$, est maximale, et

- où $\bar{s}(t)$ est le chemin le plus probable au sens de Markov, soit

$$\bar{s}(t) = \operatorname{argmax}_s \left[ P(\bar{F}_{\theta(s)}(\underline{x}_1),...,\bar{F}_{\theta(s)}(\underline{x}_t), s/\lambda) \right],$$

c'est-à-dire le chemin pour lequel la probabilité d'émission de la séquence de trames acoustiques filtrées $\bar{F}_{\theta(s)}(\underline{x}_1),...,\bar{F}_{\theta(s)}(\underline{x}_t)$ sachant $\lambda$, est maximale.

**4.** Procédé selon la revendication 3, appliqué à la reconnaissance robuste de la parole, caractérisé en ce qu'on sélectionne le chemin le plus probable $\bar{s}(T_f)$ à l'instant final $T_f$ de la séquence observée de trames acoustiques d'entrée successives comme étant celui qui vérifie

$$\bar{s}(T_f) = \operatorname{argmax}_s \left[ P(\bar{F}_{\theta(s)}(\underline{x}_1),...,\bar{F}_{\theta(s)}(\underline{x}_{Tf}),s/\lambda) \right].$$

**5.** Procédé selon la revendication 3, caractérisé en ce qu'on sélectionne le chemin le plus probable comme étant celui qui vérifie l'approximation

$$\bar{s}(t) = \operatorname{argmax}_s \left[ P(\bar{F}_{\theta 1(s)}(\underline{x}_1),...,\bar{F}_{\theta t(s)}(\underline{x}_t),s/\lambda) \right],$$

où $\bar{\theta}_i(s)$ est le meilleur vecteur de paramètres du filtre d'égalisation de fonction $\bar{F}_{\theta i(s)}$, estimé sur les i premiers points du chemin s.

**6.** Procédé selon la revendication 4, caractérisé en ce qu'on sélectionne le chemin le plus probable comme étant celui qui vérifie l'approximation

$$\bar{s}(T_f) = \operatorname{argmax}_s \left[ P(\bar{F}_{\theta 1(s)}(\underline{x}_1), ..., \bar{F}_{\theta Tf(s)}(\underline{x}_{Tf}),s/\lambda) \right],$$

où $\bar{\theta}_i(s)$ est le meilleur vecteur de paramètres du filtre d'égalisation de fonction $\bar{F}_{\theta i(s)}$, estimé sur les i premiers points du chemin s.

**7.** Procédé selon l'une quelconque des revendications 1 à 6, caractérisé en ce que pour chaque chemin, le filtre d'égalisation a pour fonction

$$F_\theta(\underline{x}) = \underline{x} - \underline{b}$$

où θ = $\underline{b}$, et $\underline{b}$ est défini par

$$\underline{b}^T = \left[ \sum_{\tau=t_0}^{t} (\underline{\mathbf{x}}_\tau - \underline{m}_{q\tau})^T \cdot \underline{R}_{q\tau}^{-1} \right] \cdot \left[ \sum_{\tau=t_0}^{t} \underline{R}_{q\tau}^{-1} \right]^{-1} \cdot$$

**8.** Procédé selon l'une quelconque des revendications 1 à 6, caractérisé en ce qu'on filtre lesdites perturbations par régression linéaire multiple au moyen d'un filtre d'égalisation ayant pour fonction, pour chaque chemin, une fonction affine

$$F_\theta(\underline{x}) = \underline{A}.\underline{x} + \underline{b},$$

où θ = ($\underline{A}$,$\underline{b}$), où $\underline{A}$ est une matrice carrée et $\underline{b}$ est un vecteur colonne.

**9.** Procédé selon la revendication 8, caractérisé en ce que la matrice $\underline{A}$ est diagonale.

**10.** Procédé selon l'une quelconque des revendications 1 à 9, caractérisé en ce que les trames acoustiques d'entrée sont des vecteurs cepstraux calculés à partir du signal de parole sur des fenêtres temporelles qui se recouvrent partiellement.

**11.** Procédé selon l'une quelconque des revendications 1 à 10, dans lequel les perturbations sont de nature convolutive et/ou additive.

**12.** Procédé selon l'une quelconque des revendications 1 à 11, dans lequel les perturbations varient peu dans le temps.

**13.** Dispositif d'égalisation d'un signal de parole mettant en oeuvre le procédé selon l'une quelconque des revendications 1 à 12, caractérisé en ce qu'il comprend des moyens de filtrage d'égalisation recevant en entrée le signal de parole affecté par des perturbations et fournissant en sortie un signal de parole à perturbations réduites.

**14.** Dispositif selon la revendication 13, caractérisé en ce que les moyens de filtrage d'égalisation comprennent :

- des moyens (10) de calcul de l'énergie spectrale dans plusieurs bandes de fréquence pour obtenir le spectre (S(f)) des trames acoustiques du signal de parole (s(n)),
- des moyens (16) de calcul du logarithme de l'énergie spectrale desdites trames acoustiques, disposés en sortie des moyens (10) de calcul de l'énergie spectrale, et
- des moyens (18) de transformation en cosinus inverse, disposés en sortie desdits moyens (16) de calcul du logarithme de l'énergie spectrale, pour fournir en sortie le cepstre (C(n)) desdites trames acoustiques.

**Claims**

**1.** A method of equalizing a speech signal constituted by an observed sequence of successive input sound frames, which speech signal is liable to be affected by disturbances, said method consisting in modelizing the speech signal by a hidden Markov model, said method being characterized, at each instant t, by the further steps of :

- forming a plurality of equalization filters associated with paths in the Markov sense at instant t, on the basis of a plurality of earlier sound frames and on the basis of a plurality of parameters of the Markov model ;

- applying at least a plurality of said equalization filters to obtain, at instant t, a plurality of filtered sound frames sequences and an utterance probability for each of the paths respectively associated with the equalization filters applied ;
- selecting that one of said equalization filters which corresponds to a most probable path, in the Markov sense, which is that of said paths which has a highest utterance probability of the sequence of sound frames filtered by the corresponding applied equalization filter ; and
- selecting as an equalized frame the filtered frame supplied by the selected equalization filter.

2. A method according to claim 1, wherein

each sound frame is represented by a vector $\underline{x}_t$,
a path having a length t in the Markov sense is a sequence of t states or transitions $s = \{ q_1, ..., q_t \}$, and
that of said equalization filters which is associated with path s is defined by a function $F_{\theta(s)}(.)$, where $\theta(s)$ is a vector consisting of parameters of the equalization filter associated with path s,
said method being characterized in that for each path s, the equalization filters parameters which is associated with said path are estimated by a function $F_{\theta(s)}(.)$ specifying the equation

$$\sum_{\tau=t0}^{t} \left( F_{\theta(s)}(\underline{x}_\tau) - \underline{m}_{q\tau}^{-1} \right)^T \cdot \underline{R}_{q\tau}^{-1} \cdot \frac{\partial F_{\theta(s)}(\underline{x}_\tau)}{\partial\theta} + \frac{\partial \ln\left\|\underline{J}(\underline{x}_\tau)\right\|}{\partial\theta} = 0$$

where $t_0$ is a predetermined initial instant,
where $\underline{m}_{q\tau}$ is a vector representing a mean value and $\underline{R}_{q\tau}$ is a covariance matrix, both associated with a probability law of utterance of a vector $\underline{x}_\tau$ in state or transition $q_\tau$,
where $(.)^T$ designates the transposed matrix,
where $(.)^{-1}$ designates the inverse matrix,
where $\frac{\partial}{\partial\theta}$ designates the partial derivative with respect to $\theta$, and
where $\underline{J}(\underline{x}_\tau)$ is a Jacobian matrix, in which an element located in a k-th line and a $\ell$-th column, where k and $\ell$ are integers, is the derivative of a k-th element of the vector $\underline{x}_\tau$ with respect to a $\ell$-th element of $F_{\theta(s)}(\underline{x}_\tau)$.

3. A method according to claim 2, in which the hidden Markov model is denoted $\lambda$, characterized in that, for filtering disturbances that affect a sound frame $\underline{x}_{t+1}$ (a priori filtering) or a sound frame $\underline{x}_t$ (a posteriori filtering), said method consists in applying only that of the filters whose equalization function is $F_{\bar\theta t(\bar s(t))}$,
where $\bar\theta_t(s)$ is a best parameters vector of the equalization filter whose function is $F_{\bar\theta t(s)}$, namely

$$\overline{\theta}_t(s) = \arg\max_\theta \left\lfloor P\left( F_{\theta(s)}(\underline{x}_{t0}), ..., F_{\theta(s)}(\underline{x}_t), s/\lambda \right) \right\rfloor$$

which is that parameters vector which has a maximum utterance probability of the filtered sound frame sequence $F_{\theta(s)}(\underline{x}_{t0}), ..., F_{\theta(s)}(\underline{x}_t)$ knowing $\lambda$, and
where $\bar s(t)$ is a most probable path in the Markov sense, namely

$$\overline{s}(t) = \arg\max_s \left\lfloor P\left( F_{\overline{\theta}(s)}(\underline{x}_1), ..., F_{\overline{\theta}(s)}(\underline{x}_t), s/\lambda \right) \right\rfloor$$

which is that of said paths which has a maximum utterance probability of the filtered sound frame sequence $F_{\bar\theta(s)}(\underline{x}_1), ..., F_{\bar\theta(s)}(\underline{x}_t)$, knowing $\lambda$.

4. A method according to claim 3, applied to robust speech recognition, characterized in that the most probable path $\bar s(T_f)$ is selected at a final instant $T_f$ of the observed sequence of successive input sound frames as being that of said paths which satisfies

$$\overline{s}(T_f) = \arg\max_s \left[ P\left( F_{\overline{\theta}(s)}(\underline{x}_1),...,F_{\overline{\theta}(s)}(\underline{x}_{Tf}), s/\lambda \right) \right]$$

**5.** A method according to claim 3, wherein the most probable path is selected as being that of said paths which satisfies the following approximation :

$$\overline{s}(t) = \arg\max_s \left[ P\left( F_{\overline{\theta}(s)}(\underline{x}_1),...,F_{\overline{\theta}t(s)}(\underline{x}_t), s/\lambda \right) \right]$$

where $\overline{\theta}_i(s)$ is a best parameter vector of the equalization filter whose function is $F_{\overline{\theta}i(s)}$, estimated on the i first points of path s.

**6.** A method according to claim 4, characterized in that the most probable path is selected as being that of said paths which satisfies the following approximation :

$$\overline{s}(T_f) = \arg\max_s \left[ P\left( F_{\overline{\theta}(s)}(\underline{x}_1),...,F_{\overline{\theta}(s)}(\underline{x}_{Tf}), s/\lambda \right) \right]$$

where $\overline{\theta}_i(s)$ is a best parameter vector of the equalization filter whose function is $F_{\theta i(s)}$, estimated on the i first points of path s.

**7.** A method according to anyone of the claims 1 to 6, characterized in that for each path, the equalization filter has the following function :

$$F_\theta(\underline{x}) = \underline{x} - \underline{b}$$

where $\theta = \underline{b}$, and $\underline{b}$ is given by

$$\underline{b}^T = \left[ \sum_{\tau=t_0}^t \left( \underline{x}_\tau - \underline{m}_{q\tau} \right)^T \cdot \underline{R}_{q\tau}^{-1} \right] \cdot \left[ \sum_{\tau=t_0}^t \underline{R}_{q\tau}^{-1} \right]^{-1}$$

**8.** A method according to anyone of the claims 1 to 6, characterized in that said disturbances are filtered using linear multiple regression, by means of an equalization filter whose function is, for each path, an affine function :

$$F_\theta(\underline{x}) = \underline{A}.\underline{x} + \underline{b},$$

where $\theta = (\underline{A},\underline{b})$, where $\underline{A}$ is a square matrix and $\underline{b}$ is a column vector.

**9.** A method according to claim 8, wherein said matrix A is diagonal.

**10.** A method according to anyone of the claims 1 to 9, characterized in that said input sound frames are cepstrum vectors which are computed from the speech signal on time windows which overlap partially.

**11.** A method according to anyone of the claims 1 to 10, characterized in that said disturbances are of convolutive and/or of additive nature.

**12.** A method according to anyone of the claims 1 to 11, characterized in that said disturbances vary little over time.

13. A device for equalizing a speech signal by performing the method according to one of the claims 1 to 12, characterized in that it comprises equalizing filtering means receiving said speech signal affected by disturbances as an input and delivering a speech signal affected by reduced disturbances as an output.

14. An apparatus according to claim 13, characterized in that said equalizing filtering means comprise:

means (10) for calculating a spectrum energy of the speech signal in a plurality of frequency bands and for outputting a spectrum (S(f)) of said sound frames of said speech signal (s(n));
means (16) for calculating a logarithm of the spectrum energy of said sound frames, which are connected to an output of said means (10) for calculating spectrum energy ; and
means (18) for performing an inverse cosine transformation, which are connected to an output of said means (16) for calculating spectrum energy logarithm, for outputting a cepstrum (C(n)) of said sound frames.

**Patentansprüche**

1. Verfahren zum Entzerren eines Sprachsignals, das aus einer überwachten Abfolge aufeinanderfolgender akustischer Eingangs-Rasterbilder besteht und welches durch Störungen beeinflussbar ist, bei welchem das Sprachsignal mittels eines verborgenen Markow-Modells geformt wird, dadurch gekennzeichnet, dass zu jedem Zeitpunkt $t$:

- aus mehreren vorhergehenden akustischen Rasterbildern und aus mehreren Parametern des Markow-Modells Entzerrungsfilter gebildet werden, welche den Pfaden nach Markow zum Zeitpunkt $t$ zugeordnet sind;
- zumindest einige der Entzerrungsfilter so eingesetzt werden, dass man zum Zeitpunkt $t$ mehrere Abfolgen gefilterter akustischer Rasterbilder und eine Sendewahrscheinlichkeit für jeden der jeweils den eingesetzten Entzerrungsfiltern zugeordneten Pfade erhält;
- das Entzerrungsfilter belegt wird, das dem Pfad mit der höchsten Wahrscheinlichkeit im Sinne von Markow zugeordnet ist, d.h. dem Pfad, für welchen die Sendewahrscheinlichkeit der Abfolge der akustischen Rasterbilder, die mittels des entsprechenden eingesetzten Entzerrungsfilters gefiltert wurden, am höchsten ist; und
- als entzerrtes Rasterbild das gefilterte Rasterbild belegt wird, das von dem festgehaltenen Entzerrungsfilter geliefert wurde.

2. Verfahren nach Anspruch 1, bei welchem
jedes akustische Rasterbild durch einen Vektor $\underline{x}_t$ dargestellt wird,
ein Pfad mit der Länge $t$ nach Markow eine Abfolge von $t$ Zuständen oder Übergängen in der Schreibweise
$s = \{q_1, ..., q_t\}$ ist, und

- die Funktion, welche das dem Pfad s zugeordnete Entzerrungsfilter in der Schreibweise $F_{\Theta(s)}(.)$ notiert wird, wobei $\Theta(s)$ ein Vektor der Parameter des dem Pfad s zugeordneten Entzerrungsfilters ist,

dadurch gekennzeichnet, dass für jeden Pfad s das Entzerrungsfilter Parameter erhält, die nach der Gleichung

$$\sum_{T=t_0}^{t} \left(F_{\Theta(s)}(\underline{x}_T) - \underline{m}q_T\right)^T \cdot \underline{R}q_T^{-1} \cdot \frac{\delta F_{\Theta(s)}(\underline{x}_T)}{\delta\Theta} + \frac{\delta\ln\|\underline{J}(\underline{x}_T)\|}{\delta\Theta} = 0$$

hochgerechnet werden,
bei welcher $t_0$ ein vorgegebener Anfangszeitpunkt ist,
$\underline{m}q_T$ und $\underline{R}q_T$ jeweils den Vektor angeben, welcher den Mittelwert und die dem Verlauf der Sendewahrscheinlichkeit eines Vektors $\underline{X}_T$ im Zustand oder Übergang $q_T$ zugeordnete Kovarianz-Matrix repräsentiert,
$(.)^T$ die transponierte Matrix bezeichnet,
$(.)^{-1}$ die umgekehrte Matrix angibt,
$\delta/\delta\Theta$ die teilweise Abweichung gegenüber $\Theta$ bezeichnet, und
$J(\underline{x}_T)$ die Jakobsche Matrix ist, deren in der k-ten Zeile und der I-ten Spalte befindliches Element - wobei k und I ganzzahlig sind - die Ableitung des k-ten Elements des Vektors $x_T$ bezüglich des I-ten Elements des Vektors $F_{\Theta(s)}$ ist.

**3.** Verfahren nach einem der Ansprüche 1 und 2, bei welchem das verborgene Markow-Modell als $\lambda$ geschrieben wird, dadurch gekennzeichnet, dass zum Filtern der Störungen, welche das akustische Rasterbild $\underline{x}_{t-1}$ (Filterung im voraus) oder das akustische Raserbild $\underline{x}_t$ (Filterung im nachhinein) ausschließlich das Filter mit der Entzerrungsfunktion $F_{\theta t(s)(t))}$ eingesetzt wird,

- wobei $\bar{\theta}t(s)$ der günstigste Vektor der Parameter des Entzerrungsfilters mit der Funktion $F_{\theta t(s)(t)}$ ist, und zwar $\bar{\theta}t(s) = \text{argmax}_\Theta [P\, F_{\theta(s)}(\underline{x}_{t0}), ...\, F_{\theta(s)}(x_t), s/\lambda)]$, d.h. der Parametervektor, bei dem die Sendewahrscheinlichkeit der Abfolge gefilterter akustischer Rasterbilder $F_{\theta(s)}(\underline{x}_{t0}) ...\, F_{\theta(s)}(x_t)$ in Kenntnis von $\lambda$ den größtmöglichen Wert hat, und
- wobei $\bar{s}(t)$ den wahrscheinlichsten Pfad im Sinne von Markow darstellt, und zwar $\bar{s}(t) = \text{argmax}_s [P\, F_{\theta(s)}(\underline{x}_1), ...\, F_{\theta(s)}(x_t), s/\lambda)]$, d.h. der Pfad, bei dem die Sendewahrscheinlichkeit der Abfolge gefilterter akustischer Rasterbilder $F_{\theta(s)}(\underline{x}_1) ...\, F_{\theta(s)}(x_t)$ in Kenntnis von $\lambda$ den größtmöglichen Wert hat.

**4.** Verfahren nach Anspruch 3, eingesetzt zur stabilen Worterkennung, dadurch gekennzeichnet, dass als Pfad mit der höchsten Wahrscheinlichkeit $s(T_l)$ zum Endzeitpunkt $T_f$ der überwachten Abfolge aufeinanderfolgender akustischer Eingangs-Rasterbilder als jener ausgewählt wird, der folgende Bedingung erfüllt:

$$\bar{s}(T_f) = \text{argmax}_s [P\, \bar{F}_{\theta(s)}(\underline{x}_1), ...\, \bar{F}_{\theta(s)}(x_{Tf}), s/\lambda)].$$

**5.** Verfahren nach Anspruch 3, dadurch gekennzeichnet, dass als Pfad mit der höchsten Wahrscheinlichkeit als jener ausgewählt wird, der folgende Näherung erfüllt:

$$\bar{s}(t) = \text{argmax}_s [P\, F_{\theta 1(s)}(\underline{x}_1), ...\, F_{\theta t(s)}(x_t), s/\lambda)]$$

wobei $\bar{\Theta}_1(s)$ den günstigsten Vektor der Parameter des Entzerrungsfilters mit der Funktion $F_{\theta 1(s)}$ darstellt, der über die $i$ ersten Punkt des Pfades s hochgerechnet wird.

**6.** Verfahren nach Anspruch 4, dadurch gekennzeichnet, dass als Pfad mit der höchsten Wahrscheinlichkeit jener ausgewählt wird, der die Näherung erfüllt:

$$\bar{s}(T_f) = \text{argmax}_s [P\, \bar{F}_{\theta 1(s)}(\underline{x}_1), ...\, \bar{F}_{\theta Tf(s)}(x_{Tf}), s/\lambda)]$$

wobei $\bar{\Theta}_1(s)$ den günstigsten Vektor der Parameter des Entzerrungsfilters mit der Funktion $F_{\theta i(s)}$ darstellt, der über die $i$ ersten Punkt des Pfades s hochgerechnet wird.

**7.** Verfahren nach einem der Ansprüche 1 bis 6, dadurch gekennzeichnet, dass für jeden Pfad das Entzerrungsfilter die Funktion

$$F_\Theta(\underline{x}) = \underline{x} - \underline{b}$$

besitzt, wobei $\Theta = \underline{b}$ ist und $\underline{b}$ durch folgende Beziehung definiert wird:

$$\underline{b}^T = \left[ \sum_{t=t_0}^{t} (\underline{x}_T - \underline{m}_{qT})^T \cdot \underline{R}_{qT}^{-1} \right] \cdot \left[ \sum_{t=t_0}^{t} \underline{R}_{qT}^{-1} \right]^{-1}.$$

**8.** Verfahren nach einem der Ansprüche 1 bis 6, dadurch gekennzeichnet, dass die Störungen durch mehrfache lineare Regression mit Hilfe eines Entzerrungsfilters ausgefiltert werden, welches für jeden Pfad eine affine Funktion

$$F_\Theta(\underline{x}) = \underline{A} \cdot \underline{x} + \underline{b}$$

besitzt, bei welcher Θ = (A, b) ist, wobei es sich bei A um eine quadratische Matrix handelt und b ein Spaltenvektor ist.

9.  Verfahren nach Anspruch 8, dadurch gekennzeichnet, dass die Matrix A diagonal ist.

10. Verfahren nach einem der Ansprüche 1 bis 9, dadurch gekennzeichnet, dass die akustischen Eingangs-Rasterbilder Vektorenbündel sind, welche aus dem Sprachsignal über Zeiffenstern berechnet werden, die sich teilweise überdecken.

11. Verfahren nach einem der Ansprüche 1 bis 10, bei welchem die Störungen Faltungen aufweisen und/oder additiv sind.

12. Verfahren nach einem der Ansprüche 1 bis 11, bei welchem die Störungen sich über die Zeit nur wenig verändern.

13. Vorrichtung zum Entzerren eines Sprachsignals unter Einsatz des Verfahrens nach einem der Ansprüche 1 bis 12, dadurch gekennzeichnet, dass es Filtereinrichtungen zur Entzerrung aufweist, welche am Eingang das von Störungen beeinflusste Sprachsignal empfängt und am Ausgang ein Sprachsignal mit verringerten Störungen liefert.

14. Vorrichtung nach Anspruch 13, dadurch gekennzeichnet, dass die Filtereinrichtungen zur Entzerrung folgendes umfassen:

   - Einrichtungen (10) zum Berechnen der Spektrumsenergie in mehreren Frequenzbändern, um so das Spektrum (S(f)) der akustischen Rasterbilder des Sprachsignals (s(n)) zu erhalten,
   - Einrichtungen (16) zum Berechnen des Logarithmus der Spektrumsenergie der akustischen Raserbilder, die am Ausgang der Einrichtungen (10) zum Berechnen der Spektrumsenergie angeordnet sind, und
   - Einrichtungen (18) zur Transformierung in eine umgekehrte Kosinus-Funktion, die am Ausgang der Einrichtungen (16) zum Berechnen des Logarithmus der Spektrumsenergie angeordnet sind, um so am Ausgang das Bündel (C(n)) der akustischen Rasterbilder zu liefern.

EP 0 806 760 B1

12

10

14

1

16

18

FFT

S (n)

S(f)

LOG $|.|^2$

FFT$^{-1}$

C (n)